# EUROPEAN PATENT SPECIFICATION

(11) **EP 1 289 800 B1**
(45) Date of publication and mention of the grant of the patent: **26.04.2006**
(21) Application number: 01931316.2
(22) Date of filing: 29.05.2001
(51) Int. Cl.: B60R 13/08, C08J 9/10

(54) **INSERT ELEMENT FOR CAVITY SEALING**
EINSATZELEMENT ZUR ABDICHTUNG VON HOHLTRÄGERN
ELEMENT D'INSERTION POUR SCELLEMENT DE CAVITE

(30) Priority: 02.06.2000 CH 110000
(43) Date of publication of application: 12.03.2003
(73) Proprietor: RIETER AUTOMOTIVE (INTERNATIONAL) AG, 8702 Zollikon (CH)
(72) Inventor: DANIERE, Pierre, F-82200 Moissac (FR); JAMBERT, Serge, F-82100 Castelsarrasin (FR); BALEYDIER, Giles, F-82100 Castelsarrasin (FR); STIEFEL, Peter, 50733 Köln (DE)
(74) Representative: Alder, Hans Rudi
(86) International application number: PCT/CH2001/000333
(87) International publication number: WO 2001/092063

(56) References cited:
- EP-A- 0 730 999
- WO-A-01/30906
- WO-A-99/37506
- US-A- 5 642 914
- PATENT ABSTRACTS OF JAPAN vol. 1999, no. 14, 22 December 1999 (1999-12-22) & JP 11 254462 A (NEOEX LAB INC), 21 September 1999 (1999-09-21)

## Description

The present invention concerns an insert piece for sealing cavities in vehicle body carriers, in particular in vehicle body pillars, according to the preamble of claim 1.

Vehicles of all types have carrier or support parts in the form of hollow structural members. These carrier parts usually consist of two formed or pressed metal sheets which are arranged in the vehicle in such a manner, that an inner surface and an outer surface are defined. In order to stiffen these two pillar-like hollow structural members it is common to arrange an additional, third metal sheet inside these hollow structural members. Thus, different cavities are formed inside the hollow structural members. These carrier parts and cavities cause vibrations and noise to be transported throughout the vehicle, which is detrimental to the comfort of passengers, i.e. results in vibrations and noise in the vehicle interior.

It is therefore known in the art to insert partitioning walls in these hollow structural members in order to prevent the transportation of sound and to dampen vibrations. Such insert parts are known to the man skilled in the art, for example from EP 0 730 999 or US 5,642,914. US 5 642 914 describes an insert element according to the preamble of claim 1. The insert parts described in these publications essentially comprise a support structure which is secured inside the hollow structural members, and is edged with a foamable material which is heated and thereby foams during manufacture of the vehicle. In this way a partitioning wall is formed inside the hollow structural member. These partitioning walls serve to dampen the vibrations of the carrier elements, and also have a noise insulating effect, i.e. they reflect the noise transported by the carrier elements. The securing of these insert parts makes it necessary to provide apertures in the carrier elements, through which suitable retaining means, in particular screws or clips, can be guided- Experience shows that these apertures cannot be completely sealed off by the foaming process during vehicle manufacture, which negatively effects the noise insulation and moisture barrier properties of the partitioning walls.

It is therefore the object of the present invention to provide an insert element which overcomes the deficiencies of the prior known insert parts. In particular, it is the object of the present invention to provide an insert element for sealing cavities which improves the acoustic properties of these parts. Furthermore, an insert element is to be provided which can be cost-efficiently manufactured and which is simple to insert.

This is achieved by an insert element for sealing cavities having the features of claim 1, and in particular by an insert element on whose frame at least two lateral and not immediately adjacently arranged support faces are provided. This arrangement allows the unhindered foaming of the insert element at its peripheral regions and thus leads to a complete insulation, in particular in the region of the retaining or securing elements. Furthermore, with this arrangement the foam-covered surface portion of the carrier cross-section to be sealed is increased.

In the invention, at least one of the support faces is formed as a clip. This allows the clip to be totally engulfed by foam during the foaming process, thus completely sealing the aperture for securing the carrier elements.

In a further preferred embodiment of the invention, the material filling the frame of the carrier element is in the form of a lattice and is covered with a foamable material. This lattice can be made of a metallic material, in particular of steel sheet or aluminium, or can be made of a thermoplastic polymer, for example a polyamide or a polypropylene, which can be compounded with polybutadien to controllably determine the stiffness. In this way, the relatively expensive filler material can be replaced by a more cost-effective foaming material. This embodiment can be carried out in such a manner, that a compact filling is produced during the foaming process, the skin of which is geometrically irregular and closed-celled, thus leading to a further improvement in the sound insulation properties.

As a foamable material, thermoplastic polymers are suitable, in particular a copolymer of ethylene and vinylacetate (PEVA), to which is added a foaming agent, in particular azodicarbonamide and a cross-linking agent, in particular dicumylperoxide. During foaming, this material forms a closed-cell foam which is not only noise insulating and noise absorbing but is also particularly suitable as a moisture barrier and air-tight sealant.

Other preferred embodiments have the features of the dependent claims.

In a further embodiment, the securing means comprises a retaining element which protrudes from the edge region of the insert element and can be either engaged or locked into an aperture provided for this purpose, or can be inserted into a double-clip as a counterpart.

The advantages of the insert element according to the present invention are immediately obvious to the person skilled in the art and are to be seen, in particular, in the effective sealing, the significant increase in sound absorption and thus in the improvement of the acoustic efficiency, as well as in a cost-effective manufacture and assembly.

The invention is described in the following with the aid of the drawings and the subsequent description of a preferred embodiment.
- Fig. 1: shows a cross section through a vehicle body carrier with an inserted insert element;
- Fig. 2: shows a detailed view of an insert element according to the invention;
- Fig. 3: shows a diagram of sound absorption curves.

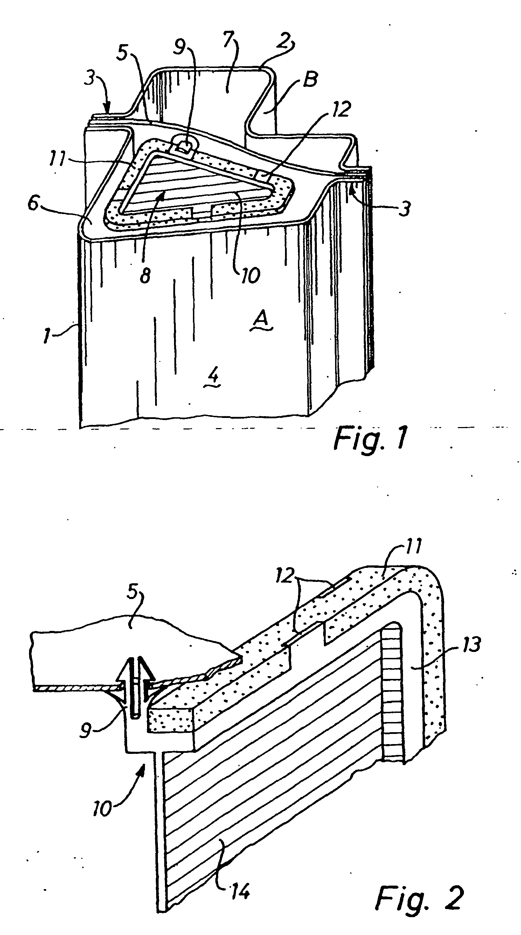

Figure 1 is a cross section through a vehicle body carrier 4. This carrier 4 comprises a first formed sheet metal part 1, constituting an outer surface A and a second formed sheet metal part 2, constituting an inner surface B. These two sheet metal parts 1, 2 are welded together at their edges 3. For further stiffening the carrier 4 in this embodiment, an intermediate metal sheet 5 is welded, which divides the inner space of the carrier 4 into an outer cavity 6 and an inner cavity 7. In order to seal the outer cavity 6, an insert element 8 is secured to the intermediate metal sheet 5. For this purpose, the insert element 8 comprises securing means 9, and in particular a clip, which grasps into an aperture in the intermediate metal sheet 5. The insert element 8 comprises a support structure 10, on to which there is applied foamable sealing material 11. In order to retain the foamable sealing material 11 in place, the support structure 10 comprises at least two, not immediately adjacently arranged support faces 12. It is essential for the purpose of the present invention that these support faces are not immediately adjacent to each other, because otherwise the foamable sealing material could not foam freely and pervious or leaky areas could result. Furthermore, the inventive arrangement results in a considerable increase in the surface areas of the cavity cross-sectional areas which are covered with foam, which substantially improves the acoustical efficiency.

In a further development of this inventive insert element, the securing means are formed in such a manner that a further insert element can be fastened thereto from the opposite side.

Figure 2 clarifies the inventive design of the insert element 8. The support structure 10 essentially comprises a frame 13 and an inner part 14. At the lateral part of the frame, and not exactly opposite each other, are arranged support faces 12. One of these support faces is formed as a securing means and in the embodiment of Figure 2, has the shape of a clip 9. This Figure shows a portion of the intermediate metal sheet 5 in order to distinctly show the functioning of the clip'9. Above or over the frame 13 of the support structure 10 there is arranged a strip bearing foamable sealing material 11, which is held in place by the support faces 12. with this arrangement, the sealing material can completely engulf the clip 9 with foam during the foaming process and can flow into the aperture of the intermediate metal sheet 5 foreseen for receiving the securing means 9. This ensures that these apertures are impermeably sealed against air and noise with the foaming process. In a further development of the inventive insert element the inner part 14 is replaced by a lattice, which again serves as a support for a foamable sealing material. The foaming process results in a further increase in the surface area of the cavity cross-sectional area which is covered with foam, which considerably improves the acoustic efficiency and in particular the noise absorption capability. Further, it is understood that the foamed material has an airproof skin which serves as a moisture barrier. The person skilled in the art of acoustics will be in a position to design the insert element in such a way as to optimize the acoustic insulation and absorption properties for the specific requirements. In the present embodiment, where the support structure 10 has a lattice-type inner part 14, the amount of filling material required - usually polyamide - can be substantially reduced, thus allowing the entire insert element to be produced relatively inexpensively, because the foamable material used according to the present invention is substantially more cost-efficient than polyamide. Furthermore, a lattice-type inner part of the support structure 10 also permits this inner part to be made of inexpensive polypropylene instead of the usually used polyamide. Even though polypropylene has a lower melting point than polyamide and is therefore not suitable for use as support structure material, it can be applied as a lattice-type inner part, because the temperature of 160°C to 200°C required for the foaming process is in turn decreased by the foaming material 11.

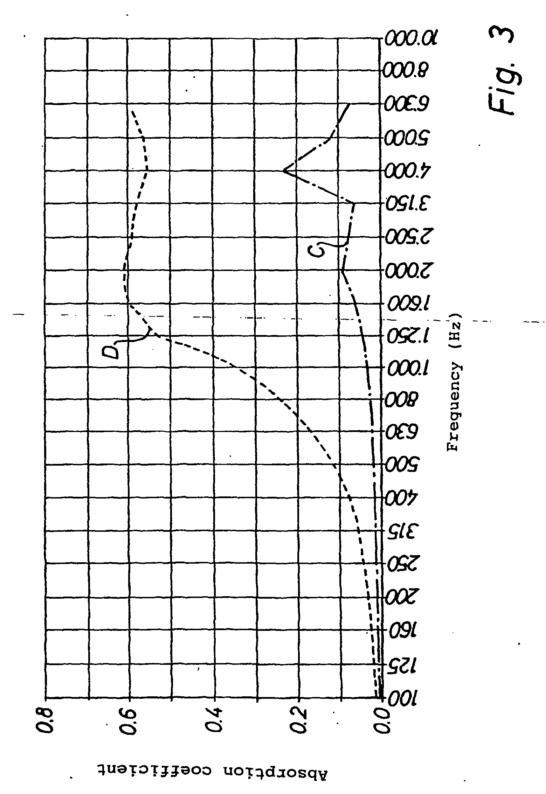

The measurement curves shown in Figure 3 are the results of a comparative measurement. A conventional insert element having a closed inner part 14 and a groove-shaped support structure arrangement was measured in an impedance tube according to the norm D45 5430. The resulting measurement curve C shows that the value of the absorption coefficient for frequencies lower than 3150 Hz is less than 0.1, and that the value for frequencies in the range between 3150 Hz to 5000 Hz reaches a maximum of 0.23. On the other hand, for an insert element according to the present invention measurement curve D shows a substantially improved absorption behaviour at frequencies above 1250 Hz, i.e. in this range shows an absorption coefficient of around 0.58. By increasing the proportion of the area covered with foam the absorption coefficient can be further improved to a value of around 0.8. These comparative measurements clearly show that by using specific configuration of the support structure 10 and thereby increasing the proportion of the sealed cross-sectional area covered with foamable material, the acoustic absorption is substantially increased without decreasing the acoustic insulation.

In a preferred embodiment, a thermoplastic polymer is used as a foamable material, in particular a copolymer of ethylene and vinyl acetate (PEVA), to which copolymer a foaming agent, in particular azodicarbonamide, and a cross-linking agent, in particular dicumylperoxide, are added. This results in a closed-cell foam during the foaming process which is especially suitable as a moisture barrier and an airtight sealant.

## Claims

1. Insert element (8) for sealing of cavities (6, 7) in vehicle body carriers by means of a foaming process, in particular vehicle body pillars (4), having sealing means comprising a foamable material (11) and means (9) for securing the same in the hollow cavities (6, 7), whereby the insert element (8) comprises a support structure (10) for the foamable material (11), said support structure (10) having a frame (13) and an inner part (14), wherein the frame (13) has at least two lateral and not immediately oppositely arranged support faces (12) **characterized in that** at least one of the support faces (12) is formed as securing means (9) and has the shape of a clip, said securing means (9) being arranged clip, said securing_means (9) being arranged such, that the foamable material (11) completely engulfs the clip during the foaming process and thereby flows into an aperture for receiving the securing means (9) in order to ensure that this aperture is impermeably sealed against air and noise.

2. Insert element according to claim 1, wherein the clip (9) is formed as a double clip.

3. Insert element according to claim 1 or 2, wherein the inner part (14) of the support structure (10) is in the form of a lattice.

4. Insert element according to claim 3, wherein at least the inner part (14) of the support structure (10) is made of a metallic material or of polypropylene.

5. Insert element according to one of claims 3 or 4, wherein the inner part (14) is covered with a foamable material which, after a foaming process, completely seals the inner part (14).

6. Insert element according to one of claims 1 to 4, wherein the foamable material (11) is constituted of a thermoplastic polymer, for example a copolymer of ethylene and vinyl acetate (PEVA), to which copolymer a foaming agent, for example azodicarbonamide, and a cross-linking agent, for example dicumylperoxide, are added.

## Patentansprüche

1. Einsatzelement (8) zur Versiegelung von Hohlräumen (6, 7) in Fahrzeugträgern mittels eines Schäumungverfahrens, insbesondere von Fahrzeugsäulen (4), mit Mitteln zur Abdichtung mit einem aufschäumbaren Material (11) und mit Mitteln (9) zur Befestigung derselben in den Hohlräumen (6, 7), wobei das Einsatzelement (8) ein Trägerstück (10) für das aufschäumbare Material (11) umfasst, welches Trägerstück (10) einen Rahmen (13) und eine Füttung (14) aufweist, wobei der Rahmen (13) mindestens zwei seitlich und nicht unmittelbar gegenüberliegend angeordnete Stützflächen (12) aufweist, **dadurch gekennzeichnet, dass** mindestens eine der Stützflächen (12) als Befestigungsmittel (9), insbesondere als Clip, ausgebildet ist, welche Befestigungsmittel (9) derart angeordnet sind, dass das aufschäumbare Material (11) den Clip während des Schäumungsverfahrens vollständig einhüllt und somit in eine Öffnung zur Aufnahme der Befestigungsmittel (9) fliesst, um sicher zu stellen, dass diese Öffnung gegen Luft und Geräusche undurchdringlich versiegelt ist.

2. Einsatzstück nach Anspruch 1, **dadurch gekennzeichnet, dass** der Clip als Doppelclip ausgebildet ist.

3. Einsatzstück nach Anspruch 1 oder 2, **dadurch gekennzeichnet, dass** die Füllung (14) des Trägerstücks (10) gitterförmig ausgebildet ist.

4. Einsatzstück nach Anspruch 3, **dadurch gekennzeichnet, dass** mindestens die Füllung (14) des Trägerstücks (10) aus einem metallischen Material oder aus Polypropylen besteht.

5. Einsatzstück nach einem der Ansprüche 3 oder 4, **dadurch gekennzeichnet, dass** die Füllung (14) mit einem aufschäumbaren Material belegt ist, welches mindestens die Füllung (14) nach einem Aufschäumprozess vollständig schliesst.

6. Einsatzstück nach einem der Ansprüche 1 bis 4, **dadurch gekennzeichnet, dass** das aufschäumbare Material (11) aus einem thermoplastischen Polymer, beispielsweise ein Copolymer von Ethylen und Vinylacetat (PEVA), gebildet ist, welchem Copolymer ein Treibmittel, zum Beispiel Azodicarbonamid und ein Vernetzer, zum Beispiel Dicumylperoxyd, beigemischt sind.

## Revendications

1. Elément d'insertion (8) pour scellement de cavités (6, 7) dans des supports de carrosseries de véhicules au moyen d'un procédé de moussage, en particulier dans les montants de carrosseries (4), ayant un moyen de scellement comprenant un matériau moussant (11) et un moyen (9) pour fixer celui-ci dans les cavités creuses (6, 7), dans lequel l'élément d'insertion (8) comprend une structure de support (10) pour le matériau moussant (11), ladite structure de support (10) ayant un cadre (13) et une partie intérieure (14), dans lequel le cadre (13) présente au moins deux faces de support latérales et disposées de façon non immédiatement opposée (12) **caractérisé en ce que** l'une au moins des faces de support (12) est formée comme moyen de fixation (9) et présente la forme d'une agrafe, ledit moyen de fixation (9) étant disposé de telle façon que le matériau moussant (11) envahit totalement l'agrafe durant le processus de moussage et donc s'écoule dans une ouverture destinée à recevoir le moyen de fixation (9) afin de garantir que cette ouverture est scellée hermétiquement contre l'air et le bruit.

2. Elément d'insertion selon la revendication 1, dans lequel l'agrafe (9) est formée comme une double agrafe.

3. Elément d'insertion selon la revendication 1 ou 2, dans lequel la partie intérieure (14) de la structure de support (10) est sous la forme d'un treillis.

4. Elément d'insertion selon la revendication 3, dans lequel au moins la partie intérieure (14) de la structure de support (10) est faite d'un matériau métallique ou de polypropylène.

5. Elément d'insertion selon l'une des revendications 3 ou 4, dans lequel la partie intérieure (14) est couverte d'un matériau moussant qui, après un processus de moussage, scelle complètement la partie intérieure (14).

6. Elément d'insertion selon l'une quelconque des revendications 1 à 4, dans lequel le matériau moussant (11) est constitué d'un polymère thermoplastique, par exemple un copolymère d'éthylène et d'acétate de vinyle (PEVA), auquel un agent moussant, par exemple l'azodicarbonamide, et un agent de réticulation, par exemple le dicumylperoxyde, sont ajoutés.
